# EUROPEAN PATENT APPLICATION

(11) **EP 2 169 600 A1**
(43) Date of publication of application: **31.03.2010**
(21) Application number: 08164766.1
(22) Date of filing: 22.09.2008
(51) Int. Cl.: G06Q 10/00

(54) **Method and apparatus for controlling an electronic device**

(71) Applicant: Research In Motion Limited, Waterloo, Ontario N2L 3W8 (CA)
(72) Inventor: Bells, Matthew, Waterloo Ontario N2L 6M2 (CA); Jain, Rohit Rocky, Waterloo Ontario N2T 2T8 (CA)
(74) Representative: MERH-IP Matias Erny Reichl Hoffmann

(57) **Abstract**

A method and apparatus for controlling an electronic device is provided, the electronic device having a processing unit interconnecting a memory and a display module, the processing unit configured to control the display module. The method comprises receiving, at the processing unit, first data representative of a meeting request. The method further comprises retrieving, at the processing unit, second data representative of an existing schedule, from the memory. The method further comprises generating at the processing unit a proposed schedule by merging the first data with the second data. The method further comprises, via the processing unit, controlling the display module to generate a representation of the proposed schedule on the display module.

## Description

The specification relates generally to message applications, and specifically to a method and apparatus for controlling an electronic device.

When receiving an appointment request at an electronic device, for example via e-mail, it is often difficult to determine whether the appointment should be accepted or rejected without taking additional steps. For example, a calendar application must generally be opened, and interaction with the calendar application occurs to find the date and time associated with the appointment request to determine whether the time requested is available. This process leads to an increased use of system resources of the electronic device, and is generally inconvenient for a user of the electronic device. This can be especially problematic if the appointment request is received at a mobile electronic device, in which the display and the system resources are generally limited. Further, this process may also lead to the acquisition and processing of more information than is needed, which is a further waste of system resources.

One solution to this problem is disclosed in "Towards Conversational Speech Recognition for a Wearable Computer Based Appointment Scheduling Agent", by Wong et al., and published by the Georgia Institute of Technology (Series/Report no.: GVU Technical Report; GIT-GVU-02-17), in which speech recognition technology is employed to recognize scheduling dialogue in a conversation between two people negotiating a meeting time. If verbal cues associated with a proposed meeting time are detected by the speech recognition technology, the user is presented with a visual representation of their calendar with the proposed dates and times appearing as the conversation progresses. However, this solution is very specific to verbal negotiations and requires highly specialized and costly speech recognition systems installed in a user's desktop. Further, these specialized systems must be interfaced with a user's calendar application.

### GENERAL

A first aspect of the specification may provide a method of controlling an electronic device, the electronic device having a processing unit interconnecting a memory and a display module, the processing unit configured to control the display module. The method may comprise, receiving, at the processing unit, first data representative of a meeting request. The method may further comprise retrieving, at the processing unit, second data representative of an existing schedule, from the memory. The method may further comprise generating, at the processing unit, a proposed schedule by merging the first data with the second data. The method may further comprise, via the processing unit, controlling the display module to generate a representation of the proposed schedule on the display module.

The representation of the proposed schedule can comprise a representation of existing meetings in the existing schedule which are temporally proximal to a time period associated with the meeting request, and, in the time period, a representation of the meeting request within the representation of the existing meetings in the existing schedule. The representation of the meeting request can comprise an indication that the time period associated with the meeting request is associated with the meeting request. The representation of the meeting request can comprise an indication that the meeting request is not one of the existing meetings in the existing schedule.

The representation of the proposed schedule can comprise least one of a date and a time period associated with the proposed schedule.

The representation of the proposed schedule can comprise at least a portion of the existing schedule which is temporally proximal to a time period associated with the meeting request.

The method can further comprise receiving, at the processing unit, third data representative of one of an indication of acceptance and an indication of rejection. The method can further comprise receiving, at the processing unit, when the third data is the indication of rejection, fourth data indicative of an alternate meeting time period associated with the meeting request, and transmitting at least a portion of the fourth data to a device which transmitted the first data. The fourth data can comprise at least one of an indication that an alternate-meeting-time button displayed at the display module has been activated, an indication that an alternate-meeting-time menu item displayed at the display module has been selected, an indication that an alternate-meeting-time hotkey on an input device associated with the electronic device has been activated, and cursor input, at the electronic device, indicative that the meeting request has been changed to the alternate meeting time period. The alternate meeting time period can be a different length than a time period associated with the meeting request.

The first data can comprise an indication that a time period associated with the meeting request is not moveable.

A second aspect of the specification may provide an electronic device. The electronic device may comprise a communications interface for receiving, from a communications network, first data representative of a meeting request. The electronic device may further comprise a memory for storing at least second data representative of an existing schedule. The electronic device may further comprise a processing unit, The processing unit may be enabled for receiving the first data from the communication interface. The processing unit may be further enabled for retrieving the second data from the memory. The processing unit may be further enabled for generating a proposed schedule by merging the first data with the second data. The processing unit may be further enabled for controlling a display module to generate a representation of the proposed schedule on the display module.

The electronic device can further comprise the display module and an input device.

The electronic device can comprise a handheld electronic device.

The representation of the proposed schedule generated at the display module can comprise a representation of existing meetings in the existing schedule which are temporally proximal to a time period associated with the meeting request, and, in the time period, a representation of the meeting request within the representation of the existing meetings in the existing schedule. The representation of the meeting request can comprise an indication that the time period associated with the meeting request is associated with the meeting request. The representation of the meeting request can comprise an indication that the meeting request is not one of the existing meetings in the existing schedule.

The representation of the proposed schedule on can comprise at least one of a date and a time period associated with the proposed schedule.

The representation of the proposed schedule can comprise at least a portion of the existing schedule which is temporally proximal to a time period associated with the meeting request.

The processing unit can be further enabled for receiving third data representative of one of an indication of acceptance and an indication of rejection. The processing unit can be further enabled for receiving, when the third data is the indication of rejection, fourth data indicative of an alternate meeting time period associated with the meeting request, and transmitting at least a portion of the fourth data to a device which transmitted the first data via the communications interface. The fourth data can comprise at least one of an indication that an alternate meeting time button displayed at the display module has been activated, an indication that an alternate meeting time menu item displayed at the display module has been selected, an indication that an alternate meeting time hotkey on an input device associated with the electronic device has been activated, and cursor input, the electronic device, indicative that the meeting request has been changed to the alternate meeting time period. The alternate meeting time period can be a different length than a time period associated with the meeting request.

The first data can comprise an indication that a time period associated with the meeting request is not moveable.

### BRIEF DESCRIPTIONS OF THE DRAWINGS

Embodiments are described with reference to the following figures, in which:

Fig. 1 depicts a system for controlling an electronic device, according to a non-limiting embodiment;

Fig. 2 depicts a method for controlling an electronic device, according to a non-limiting embodiment; and

Fig. 3 depicts a representation of a proposed schedule, according to a non-limiting embodiment.

### DESCRIPTION OF PREFERRED EMBODIMENTS

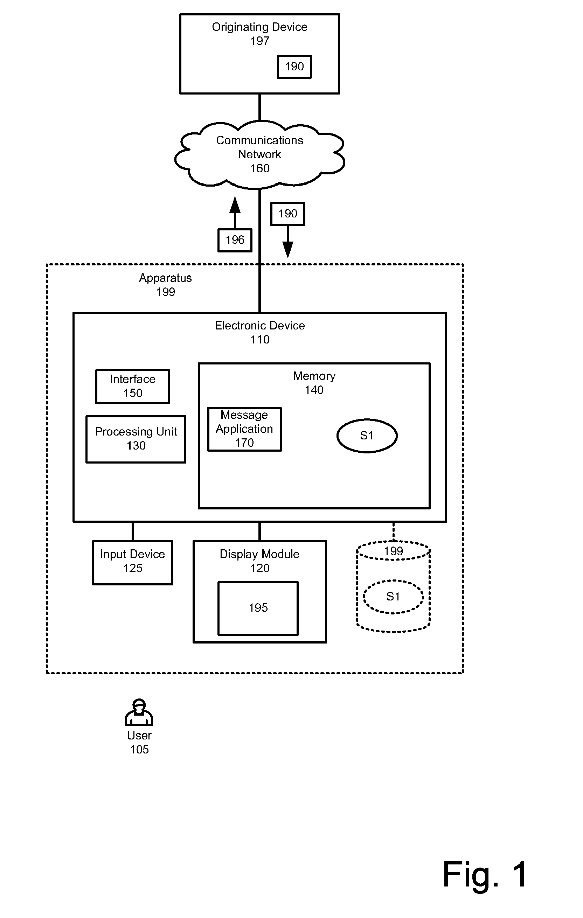

Figure 1 depicts a system for controlling an electronic device110, according to a non-limiting embodiment. The electronic device 110, associated with a user 105, is in communication with a display module 120 and an input device 125, the electronic device 110 comprising a processing unit 130 for processing data, the processing unit 130 interconnecting a memory 140 and the display module 120. The processing unit 130 is further coupled to a communications interface 150 for enabling the electronic device 110 to communicate with a communications network 160. The memory 140 stores data for processing by the processing unit 130, including a messaging application 170 that enables the processing unit 130 to process data representative of meeting requests 190 (generically a meeting request 190, and collectively meeting requests 190), when the processing unit 130 processes the messaging application 170.

Data representative of meeting requests 190 (i.e. a requested meeting) may be received at the processing unit 130 via the communications network 160 (e.g. by way of the communications interface 150), for example via an e-mail sent from an originating device 197 that is also in communication with the communications network 160. Meeting requests 190 may be processed by the processing unit 130 and the user 105 may be given the opportunity to respond to a meeting request 190 by interacting with the electronic device 110, for example via the input device 125. In some embodiments, the user 105 responds to a meeting request 190 via a dialogue box displayed on the display device 120, for example to accept or reject the meeting request 190 or to propose another time or location for the meeting. A response 196 of the user 105 may then be transmitted to the originating device 197. Further functionality of the system depicted in Figure 1 will be described below.

Non-limiting embodiments of data representative of a meeting request 190 may generally comprise a calendar date of a requested meeting, and a start time and an end time of a requested meeting. Further non-limiting embodiments of data representative of a meeting request 190 may also generally comprise an originator of a requested meeting (e.g. a user associated with the originating device 197), a subject of the requested meeting, a location of a requested meeting, invitees at the requested meeting, a status of a requested meeting (e.g. whether or not the requested meeting is tentative), a status of the meeting request 190 (e.g. whether the meeting request 190 is a new meeting request or an updated meeting request), and/or any other data associated with a requested meeting. In one non-limiting embodiment, data representative of a meeting request 190 comprises an indication that a time period associated with the meeting request 190 (e.g. the calendar date, the start time and the end time) is not moveable. For example, the requested meeting may be with a large number of invitees, and the originator of the meeting request 190 may have already negotiated the time period of the requested meeting with a portion of the invitees, making any changes to the requested meeting problematic. Hence, in these embodiments, the originator of the meeting request 190 may indicate, within the data representative of a meeting request 190, as to whether the time period associated with the meeting request 190 is moveable or not moveable.

The messaging application 170 may initiate upon start-up of the electronic device 110, the user 105 may cause the processing unit 130 to process the messaging application 170 by interfacing with the electronic device 110 via the input device 125, or the messaging application may initiate when the meeting request 190 is received. In any event, once the messaging application 170 is initiated, the user 105 may interact with the messaging application 170 via the display module 120 and/or the input device 125. In particular, the messaging application 170 is enabled to cause the display module 120 to generate a representation 195 of a proposed schedule, the representation 195 viewable by the user 105.

In some embodiments, the memory 140 further comprises schedule data S1 representative of an existing schedule associated with the electronic device 110. In other embodiments, the electronic device 110 is in communication with a database 199, the database 199 comprising the schedule data S1. In some embodiments, the database 199 is co-located with the electronic device 110 (as depicted), and may comprise an additional memory associated with the electronic device 110. In other embodiments, the database 199 is remote from the electronic device 110, and the electronic device 110 and the database 199 are in communication via the communications network 160.

In any event, the schedule data S 1 is representative of an existing schedule associated with the electronic device 110, for example a schedule the user 105 has stored on the electronic device 110. Hence, the schedule data S1 generally comprises data associated with existing meetings in the existing schedule. For example, the schedule data S1 may comprise meeting data associated each existing meeting in the existing schedule. Non-limiting embodiments of the meeting data may comprising a date of an existing meeting, a start time of an existing meeting, an end time of an existing meeting, a subject of an existing meeting, a location of an existing meeting, invitees to an existing meeting and/or any other data associated with an existing meeting. The schedule data S1 may be stored in any suitable manner, and in any suitable format. Further, the messaging application 170 is generally enabled to process the scheduling data S1 to cause the display module 120 to display at least a portion of the existing schedule.

A particular non-limiting example of the schedule data S1 comprises:

| Date: Friday November 16, 2007 | | |
|---|---|---|
| Time | Meetings | |
| 6am | | |
| 7am | | |
| 8am | | |
| 9am | | |
| 10am | | |
| 11am | | |
| 12pm | | |
| 1pm | Discuss Software Project | |
| 2pm | | Conference Call (Tentative) |
| 3pm | | |
| 4pm | | |
| 5pm | | |
| 6pm | | |
| 7pm | | |

In the non-limiting example, the schedule data S1 is organized in a table format and comprises a calendar date of the schedule, a column indicating the time of day for the calendar date, and a column for indicating the presence of existing meetings scheduled at a particular time of day on the calendar date. In other embodiments, the schedule data S1 is organized in a different manner as long as the existing meetings are associated with the time of day, and the date, on which they are scheduled.

In the non-limiting example of the schedule data S1, there are two existing meetings on the given calendar date: an existing meeting scheduled from 1pm to 5pm, and a tentative meeting scheduled from 2pm to 3pm. The user 105 may or may not be able to attend both meetings, due to the overlap, but nonetheless the schedule data S1 is representative of the existing meetings that the user 105 has scheduled. The user 105 will then refer to the schedule data S1, for example by causing the processing unit 130 to process the schedule data S1 (e.g. through interaction with a calendar application, not depicted, via the interface device 125), to determine his/her schedule on the given calendar date.

The display module 120 comprises any display device configured for displaying data to the user 105, such as a cathode ray tube (CRT), a flat panel display such as an LCD or a plasma display, and the like. The input device 125 comprises any device for receiving data from the user 105. The input device 125 may comprise a manual interface device, such as a keyboard and/or a pointing device, a voice interface device, or a combination thereof. Other types of input devices may occur to one of skill in the art. However, embodiments are not to be considered particularly limited by the display module 120 or the input device 125.

In some embodiments, the electronic device 110 comprises a personal computer, the input device 125 comprises a keyboard, and the display module 120 comprises a computer screen (e.g. CRT or flat panel display) coupled to the personal computer. In other embodiments, the electronic device 110, the display module 120 and the input device 125 may be elements of an apparatus 199. In some of these embodiments, the apparatus 199 may comprise a mobile electronic device operable to communicate with the communications network 160 via the communications interface 150. In these embodiments, the apparatus 199 may comprise a laptop computer, cell phone, a personal digital assistant (PDA), a WiFi-based communications device, a WiMax based communications device, a combination thereof, or any other mobile electronics device which allows the user 105 to receive and view message requests 190. In these embodiments, the input device 125 may comprise at least one of a keyboard, a trackball, a scroll wheel, a touchscreen device associated with the display module 120, hotkeys and/or a device for moving and clicking a cursor displayed at the display module 120.

In some embodiments, the mobile electronic device may be enabled to communicate via a wireless network, while in other embodiments, the mobile electronic device may be enabled to communicate via a wired network. In yet other embodiments, the mobile electronic device may be enabled to communicate via either a wireless or a wired network. In some embodiments the mobile electronic device is enabled to communicate with the communications network 160, via another computing device local to the mobile electronic device, which is in communication with the communications network 160. In these embodiments, the mobile electronic device may be enabled to communicate with the computing device local to the mobile device via a wired or a wireless link (e.g. WiFi, Bluetooth, and/or a hardwired serial bypass, such as a USB link).

In some embodiments the communications network 160 may comprise at least one of a wired network, a wireless network, a local area network (LAN), a wide area network (WAN), a packet-based communications network, such as the internet, the PSTN, a cell network, a WiFi network, a WiMax network, or a combination thereof.

The communications interface 150 enables the electronic device 110 to communicate via the communication network 160, including receiving the meeting request 190 and transmitting the response 190. In embodiments where the communications network 160 comprises a wireless network, the communications interface 150 comprises a wireless communications interface, as known to one of skill in the art. Non-limiting examples of a wireless communications interface include, but are not limited to, a cell phone interface (e.g. CDMA, GSM, 1x, EVDO, UTMS, and the like), a WiFi interface, a WiMax interface, and the like. In embodiments where the communications network 160 comprises a wired communications network, the communications interface 150 comprises a wired communications interface, as known to one of skill in the art. In some of these embodiments, the communications interface 150 is enabled to connect to an edge device (not depicted) of the communications network 160, for example a modem. In some of these embodiments, the communications interface 150 may be enabled to connect to the edge device via another computing device, which is in communication with the communications network 160, as described above. In yet other embodiments the communications interface 150 may be enabled for communications via either a wired or a wireless communications network.

Embodiments are not, however, to be considered particularly limiting by the electronic device 110, whether integrated into the apparatus 199 or not, the communications interface 150 or the communications network 160. Other electronic devices, interfaces and communications networks may occur to one of skill in the art.

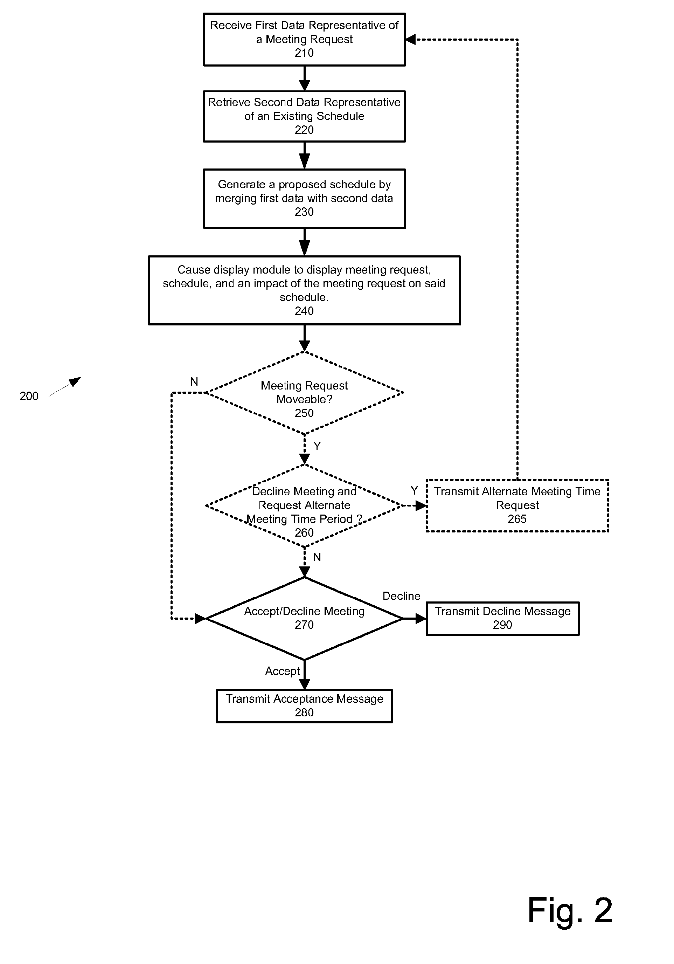

Attention is now directed to Figure 2, which depicts a non-limiting embodiment of a method 200 of controlling an electronic device 110. The method 200 may be performed by the processing unit 130 when the processing unit 130 processes the message application 170. The method 200 may, however, be performed by the processing unit 130 when the processing unit 130 processes another appropriate software application, for example a calendar application. At step 210 first data representative of a meeting request 190 is received at the processing unit 130, as described above. In a particular non-limiting example meant only to illustrate embodiments, the first data representative of a meeting request 190 comprises a calendar date of November 16, 2007, a start time of 12pm and an end time of 1pm, as well as a subject and a location of a requested meeting.

At step 220, second data representative of an existing schedule is retrieved, by the processing unit 130, from the 140 memory associated with the electronic device 110, for example the schedule data S1. In particular, data representative of existing meetings in the existing schedule which are temporally proximal to a time period associated with the meeting request 190, are retrieved, if any. For example, in some embodiments, the schedule data S1 may be processed to determine existing meetings, if any, that fall within a given time period around the requested meeting, such as on the same calendar date of the requested meeting, a given number of days before and/or after the requested meeting, a week around the requested meeting, a month around the requested meeting, or any other desired given time period.

At step 230, a proposed schedule is generated at the processing unit 130 by merging the first data with the second data. For example, the data representative of the meeting request is merged with the schedule data S1 representative of the existing schedule, such that the proposed schedule reflects the existing schedule with the requested meeting incorporated therein, and subsequently, the impact on the existing schedule if the meeting request 190 were accepted.

At step 240, via the processing unit 130, the display module is controlled to generate a representation of the proposed schedule on the display module. In particular, the display module 120 is controlled to display a representation of existing meetings in the existing schedule which are temporally proximal to a time period associated with the meeting request 190, and a representation of the meeting request 190 in association with the representation of the existing meetings in the existing schedule.

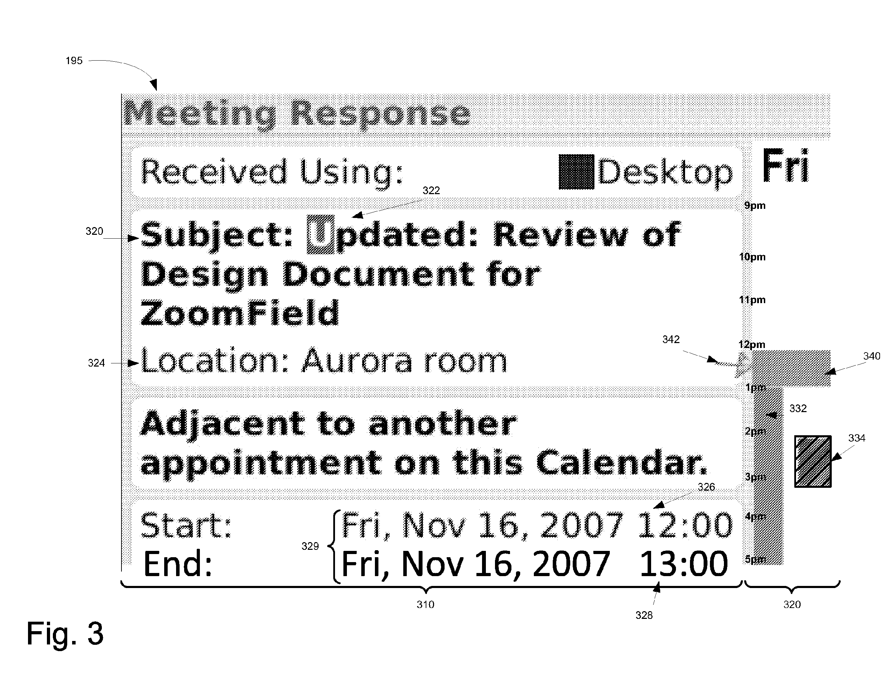

For example, attention is now directed to Figure 3, which depicts a particular non-limiting embodiment of the representation 195. Within this embodiment the representation 195 displays data 310 representative of the meeting request 190, and at least a portion of a proposed schedule 320. In this embodiment, the data 310 representative of the meeting request 190 comprises the subject 320 of the requested meeting, a status 322 of the requested meeting (e.g. the meeting request 190 is an updated meeting request), the location 324 of the requested meeting, the start time 326 and end time 328 of the requested meeting, and a calendar date 329 of the requested meeting.

Further, the at least a portion of a proposed schedule 320 is displayed in association with the data 310, for example located proximal to the data. In the non-limiting embodiment depicted in Figure 3, the at least a portion of a proposed schedule 320 is displayed vertically to the right hand side of the data 310, however the location and format of the at least a portion of a proposed schedule 320 is not generally limiting. For example, the at least a portion of a proposed schedule 320 may be displayed vertically along the left hand side of the data 310, horizontally along the top or bottom of the data 310, and/or as a floating dialogue box, or tooltip (e.g. displayed when the data 310 representative of the meeting request 190 is selected within the representation 195) temporarily obscuring the data 310 (the at least a portion of a proposed schedule 320 being displayed in suitable format within the dialogue box, or tooltip).

Within the non-limiting example of the representation 195 depicted in Figure 3, the at least a portion of a proposed schedule 320 comprises a representation (elements 332 and 334) of existing meetings in the existing schedule which are temporally proximal to a time period associated with the meeting request 190, for example, existing meetings which are on the calendar date of the meeting request 190, in this case Friday November 16, 2007. In some embodiments, as depicted, the at least a portion of a proposed schedule 320 further comprises a column indicating the time of day for the calendar date, and a column indicating existing meetings for the calendar date. In some embodiments the at least a portion of the proposed schedule 320 is depicted in a graphical format (described below), while in other embodiments the at least a portion of the proposed schedule 320 is depicted in a textual format, for example by controlling the display module 120 to generate a representation of the subject and time of each existing meeting in the at least a portion of the proposed schedule 320, on the display module 120. In other embodiments, the at least a portion of the proposed schedule 320 is depicted in a combination of graphic and textual formats.

For example, as depicted in Figure 3, the schedule data S1 from the non-limiting example described above has been processed and a representation 332 and 334 of the two existing meetings is displayed in the representation 195, in a graphical format. For example, the first existing meeting starts at 1pm and ends at 5pm (the "Discuss Software Project", from above) is depicted as a bar (representation 332) of a first colour and/or pattern that extends from 1pm to 5pm within the at least a portion of a proposed schedule 320; the second existing meeting starts at 2pm and ends at 3pm (the "Conference Call" from above) is depicted as a bar (representation 334) of a second colour and/or pattern that extends from 2pm to 3pm within the at least a portion of a proposed schedule 320 displayed within the representation 195. The colour and/or pattern of each bar (or any other bar representative of an existing meeting) may be associated with a status of an existing meeting. For example, the first colour and/or pattern may be representative of meetings that are scheduled, while the second colour and/or pattern may be representative of meetings that are tentatively scheduled. However, the colours and/or patterns of the bars 332 and 334, and/or the graphical format of how each existing meeting is represented is not particularly limiting. For example instead of a bar, each existing meeting may be representative as a line, an arrow, or any other suitable format.

Within the non-limiting example of the representation 195 depicted in Figure 3, the at least a portion of a proposed schedule 320 further comprises a representation 340 the meeting request 340 displayed in association with the representation of the existing meetings in the existing schedule. Hence, the processing unit 130 controls the display module 120 to generate a representation of the proposed schedule on the display module. Hence the user 105 is conveniently presented with a representation of what their schedule would look like if the meeting request 190 were accepted. This prevents the user 105 from having to manually access the schedule data S1, for example by opening a calendar application, and navigating to the date and time of the requested meeting to view existing meetings in the schedule that are proximal to a time period associated with the meeting request 190, reducing the time required for a decision to be made as to whether or not to accept the meeting request 190. Hence the user 105 can see at a glance what is occurring around the requested meeting, as the requested meeting is viewed along with existing meetings that are temporally proximal to the requested meeting. This makes it easier for the user 105 to decide whether or not to accept the meeting request 190, saving the user 105 time, confusion and frustration.

As well, controlling the display module to generate a representation of said proposed schedule on the display module further reduces the system resources of the electronic device 110 which are required by the user 105 to come to a decision as to whether or not to accept the meeting request 190. For example, processing by the processing unit 130 is reduced, interaction with the input device 125 is reduced (which over time can significantly reduce wear on the input device 125, due to the often mechanical nature of the input device 125, as described above), and wear on the display module 120 is reduced (as the on-time of the display module 120 is generally reduced).

The representation 340 of the meeting request 340 may be depicted in graphical format, textual format, or a combination. In embodiments where the at least a portion of the proposed schedule 320 is depicted in graphical format, the representation 340 of the meeting request 190 may also be displayed in a graphical format (as depicted in Figure 3, and described below). In embodiments where the at least a portion of the proposed schedule 320 is depicted in textual format, the representation 340 of the meeting request 190 may also be depicted in textual format. However, the format of the representation 340 of the meeting request 190 is generally non-limiting.

For example, as depicted in Figure 3, the meeting request 190 is associated with a requested meeting which starts at 12pm and ends at 1pm, on the given calendar date. The representation 340 of the meeting request 190 is hence comprises a bar of a third colour and/or pattern that extends from 12pm to 1pm within the at least a portion of a proposed schedule 320 displayed within the representation 195. In some embodiments, the third colour and/or patterns of the bar may be associated with the status of the requested meeting (i.e. the third colour and/or pattern may be associated with a requested meeting). However, the colours and/or patterns of the bar, and/or the graphical format of the representation 340 are not particularly limiting.

In some embodiments, the representation 195 may further comprise an indication 342 that the time period associated with the meeting request 190 is associated with the meeting request 190, for example the indication 342 may comprise a graphical indicator linking the data 310 representative of the meeting request 190 and the representation 340, such as the arrow depicted in Figure 3. However, the format of the indication 342 is not particularly limiting and may comprise any suitable indication, such as a line, an icon, and the like.

In one non-limiting embodiment, the processing unit 130 controls the display module 120 to display the data 310 representative of the meeting request 190 and a button that, upon activation (e.g. via the input device 125), causes the processing unit 130 to control the display module 120 to generate a representation of the proposed schedule on the display module. For example, in these embodiments, the at least a portion of the proposed schedule 320 is displayed only when desired by the user 105, as indicated by the user 105 conveniently activating the button via the input device 125. In some of these embodiments, the representation of the proposed schedule further comprises a button that, upon activation (e.g. via the input device 125), causes the display module 120 to stop displaying the representation of the proposed schedule. Hence, the user 105 may conveniently switch back and forth between displaying and not displaying the at least a portion of the schedule associated with the electronic device 110.

In some embodiments, the representation 195, comprises a button that, upon activation, causes the processing unit 130 to control the display module 120 to generate a representation of the proposed schedule in a calendar view that generally supersedes displaying the data 310. For example when the button is activated, the processing unit 130 controls the display module 120 to display the at least a portion of the proposed schedule within a calendar application. In some of these embodiments, the calendar application further comprises a button that, upon activation, causes the processing unit 130 to control the display module 120 to stop displaying the calendar application, and continue displaying the data 310. Hence, the user 105 may conveniently switch back and forth between the processing unit 130 controlling the display module 120 to generate the representation of the proposed schedule and displaying the data 310.

Returning now to Figure 2, at step 270 the processing unit receives third data representative of an indication of acceptance or rejection of the proposed schedule, and hence whether the message request 190 is accepted or rejected. In some embodiments, the third data may be generally received via the input device 125. For example, the processing unit 130 may determine whether the meeting request 190 is accepted or rejected by processing input received at the input device 125 as a result of the user 105 interacting with the input device 125. In some embodiments, the representation 195 may comprise at least one button and/or menu item for indicating whether the meeting request 190 is to be accepted or rejected, which may be activated by the user 105 through the aforementioned interaction with the input device 125. For example, the at least one button and/or menu item may be specifically associated with an action of accepting or rejecting the meeting request 190. If the third data is representative of on indication of acceptance, at step 280 an acceptance message is transmitted to the originating device 197, for example within the response 196. Alternatively, if the third data is representative of on indication of rejection, at step 290 a rejection message is transmitted to the originating device 197, for example within the response 196.

In some embodiments, an optional step 250 may be available following step 210 (or alternatively concurrent with preceding steps), the processing unit 130 determines if a time period associated with the meeting request 190 (e.g. the calendar date, the start time and the end time) is moveable or not moveable. For example, it will be recalled that in some embodiments the data representative of the meeting request 190 may comprise an indication that the time period associated with the meeting request 190 is not moveable, as determined by the originator of the meeting request 190. Hence the processing unit 130 may determine if the time period associated with the meeting request 190 is moveable or not moveable by determining if the meeting request 190 comprises an indication the time period associated with the meeting request 190 is moveable or not moveable.

If the time period is moveable, it may be determined at optional step 260 if fourth data indicative of an alternate meeting time period has been received at the processing unit 130. In some embodiments, the fourth data may be generally received via the input device 125. If so, the meeting request 190 is determined to be tentatively rejected, with the proviso that an alternate meeting time period is proposed. For example, the user 105 may indicate via the input device 125 whether or not they wish to request an alternate time period for the requested meeting, including but not limited to an alternate start time, an alternate end time, an alternate calendar date and/or a combination. The alternate time period may be of the same or different length as the time period associated with the meeting request 190.

In some embodiments, fourth data indicative of an alternate meeting time period comprises at least one of: an indication that an alternate meeting time button, displayed at the display module 120, has been activated; an indication that an alternate time menu item, displayed at the display module 120, has been selected; an indication that an alternate meeting time hotkey on the input device 125 has been activated; and cursor input indicative that a graphical representation of the meeting request 190 has been changed to the alternate time period.

For example, in some embodiments, the user 105 may indicate that they wish to request an alternate time period for the requested meeting via a button displayed at the display module 120, a menu item displayed at the display module 120,or a hotkey on the input device 125, each of which when activated (for example via an interaction with the input device 125) causes the display module 120 to display within the representation 195 a dialogue box in which the user 105 may enter details of the different time period.

In yet a further embodiment, the user 105 may indicate that they wish to request an alternate time period for the requested meeting by interacting with the input device 125 to select the representation 340 and move the representation 340 to the alternate time period. In embodiments where the at least a portion of the proposed schedule 320 and the representation 340 is depicted in a graphical format, as described above with reference to Figure 3, the user 105 may select the representation 340 via a cursor and drag the representation 340 to the alternate time period, as well as change the length of the alternate time period by selecting and dragging an appropriate side of the representation 340.

If at step 260 fourth data indicative of an alternate meeting time period has been received at the processing unit 130, then at step 265, an alternate meeting time request is transmitted to the originating device 197, for example within the response 196. The originating device 197 may then process the alternate meeting time request to extract the alternate time period and respond accordingly (i.e. accept or reject the alternate time period), which may in turn trigger the originating device 197 to transmit a new meeting request 190 to be received at step 210, or alternatively an acceptance or rejection of the alternate meeting time request. In some embodiments, the alternate meeting time request may be transmitted to all invitees of the requested meeting at step 265, who may in turn respond accordingly. In other embodiments, the invitees may not be aware of the alternate meeting time request, until the originating device 197 responds to the alternate meeting time request. In these embodiments, if the originating device 197 accepts the alternate meeting time request, the originating device 197 may subsequently transmit a new meeting request 190 to the invitees to make them aware of the new, alternate meeting time.

However, if fourth data indicative of an alternate meeting time period has been received at the processing unit 130 at step 260 (or alternatively if the fourth data is indicative that no alternate meeting time is proposed, or if the time period associated with the meeting request 190 is not moveable), the processing unit 130 continues to step 270 described above.

Those skilled in the art will appreciate that in some embodiments, the functionality of the message application 170 may be implemented using pre-programmed hardware or firmware elements (e.g., application specific integrated circuits (ASICs), electrically erasable programmable read-only memories (EEPROMs), etc.), or other related components. In other embodiments, the functionality of the message application 170 may be achieved using a computing apparatus that has access to a code memory (not shown) which stores computer-readable program code for operation of the computing apparatus. The computer-readable program code could be stored on a medium which is fixed, tangible and readable directly by these components, (e.g., removable diskette, CD-ROM, ROM, fixed disk, USB drive), or the computer-readable program code could be stored remotely but transmittable to these components via a modem or other interface device connected to a network (including, without limitation, the Internet) over a transmission medium. The transmission medium may be either a non-wireless medium (e.g., optical or analog communications lines) or a wireless medium (e.g., microwave, infrared, free-space optical or other transmission schemes) or a combination thereof.

A portion of the disclosure of this patent document contains material which is subject to copyright protection. The copyright owner has no objection to the facsimile reproduction by any one the patent document or patent disclosure, as it appears in the Patent and Trademark Office patent file or records, but otherwise reserves all copyrights whatsoever.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method of controlling an electronic device (110), the electronic device (110) having a processing unit (130) interconnecting a memory (140) and a display module (120), the processing unit (130) configured to control the display module (120), the method comprising,
receiving (210), at the processing unit (130), first data (190) representative of a meeting request;
retrieving (220), at the processing unit (130), second data (S1) representative of an existing schedule, from the memory (140);
generating (230), at the processing unit (130), a proposed schedule by merging said first data (190) with said second data (S1); and
via the processing unit (130), controlling (230) the display module (120) to generate a representation (195) of said proposed schedule on the display module (120).

2. The method of claim 1, wherein said representation (195) of said proposed schedule comprises a representation of existing meetings in said existing schedule which are temporally proximal to a time period associated with said meeting request, and, in said time period, a representation of said meeting request within said representation of said existing meetings in said existing schedule.

3. The method of claim 2, wherein said representation of said meeting request comprises an indication that said time period associated with said meeting request is associated with said meeting request.

4. The method of claim 2, wherein said representation of said meeting request comprises an indication that said meeting request is not one of said existing meetings in said existing schedule.

5. The method of any one of the preceding claims, wherein said representation (195) of said proposed schedule comprises a date and/or a time period associated with said proposed schedule.

6. The method of claim 1, wherein said representation (195) of said proposed schedule comprises at least a portion of said existing schedule which is temporally proximal to a time period associated with said meeting request.

7. The method of any one of the preceding claims, further comprising receiving, at the processing unit (130), third data representative of an indication of acceptance or an indication of rejection.

8. The method of claim 7, further comprising receiving at the processing unit (130), when said third data is said indication of rejection, fourth data indicative of an alternate meeting time period associated with said meeting request, and transmitting at least a portion of said fourth data to a device which transmitted said first data (190).

9. The method of claim 8, wherein said fourth data comprises at least one of an indication that an alternate-meeting-time button displayed at the display module (120) has been activated, an indication that an alternate-meeting-time menu item displayed at the display module (120) has been selected, an indication that an alternate-meeting-time hotkey on an input device associated with the electronic device (110) has been activated, and cursor input, at the electronic device (110), indicative that said meeting request has been changed to said alternate meeting time period.

10. The method of claim 8 or claim 9, wherein said alternate meeting time period is a different length than a time period associated with said meeting request.

11. The method of any one of the preceding claims, wherein said first data (190) comprises an indication that a time period associated with said meeting request is not moveable.

12. An electronic device (110), comprising,
a display module (120);
a communications interface for receiving, from a communications network, first data (190) representative of a meeting request;
a memory (140) for storing at least second data (S1) representative of an existing schedule; and
a processing unit (130) enabled for implementing the method of any one of claims 1 to 11.

13. The electronic device (110) of claim 12, further comprising an input device.

14. The electronic device (110) of claim 12, wherein said electronic device (110) comprises a handheld electronic device (110).

15. A computer readable medium embodying program code means that, when executed by a processor of a computing device, cause the computing device to perform the steps of the method of any one of claims 1 to 11.

## Amended claims

### Amended claims in accordance with Rule 137(2) EPC.

**1.** A method of controlling an electronic device (110), the electronic device (110) having a processing unit (130) interconnecting a memory (140) and a display module (120), the processing unit (130) configured to control the display module (120), the method comprising,
receiving (210), at the processing unit (130), first data (190) representative of a meeting request;
responsive to said receiving, retrieving (220), at the processing unit (130), second data (S1) representative of an existing schedule, from the memory (140);
generating (230), at the processing unit (130), a proposed schedule by merging said first data (190) with said second data (S1); and
via the processing unit (130), controlling (230) the display module (120) to generate a representation (195) of said proposed schedule on the display module (120).

**2.** The method of claim 1, wherein said representation (195) of said proposed schedule comprises a representation of existing meetings in said existing schedule which are temporally proximal to a time period associated with said meeting request, and, in said time period, a representation of said meeting request within said representation of said existing meetings in said existing schedule.

**3.** The method of claim 2, wherein said representation of said meeting request comprises an indication that said time period associated with said meeting request is associated with said meeting request.

**4.** The method of claim 2, wherein said representation of said meeting request comprises an indication that said meeting request is not one of said existing meetings in said existing schedule.

**5.** The method of any one of the preceding claims, wherein said representation (195) of said proposed schedule comprises a date and/or a time period associated with said proposed schedule.

**6.** The method of claim 1, wherein said representation (195) of said proposed schedule comprises at least a portion of said existing schedule which is temporally proximal to a time period associated with said meeting request.

**7.** The method of any one of the preceding claims, further comprising receiving, at the processing unit (130), third data representative of an indication of acceptance or an indication of rejection.

**8.** The method of claim 7, further comprising receiving at the processing unit (130), when said third data is said indication of rejection, fourth data indicative of an alternate meeting time period associated with said meeting request, and transmitting at least a portion of said fourth data to a device which transmitted said first data (190).

**9.** The method of claim 8, wherein said fourth data comprises at least one of an indication that an alternate-meeting-time button displayed at the display module (120) has been activated, an indication that an alternate-meeting-time menu item displayed at the display module (120) has been selected, an indication that an alternate-meeting-time hotkey on an input device associated with the electronic device (110) has been activated, and cursor input, at the electronic device (110), indicative that said meeting request has been changed to said alternate meeting time period.

**10.** The method of claim 8 or claim 9, wherein said alternate meeting time period is a different length than a time period associated with said meeting request.

**11.** The method of any one of the preceding claims, wherein said first data (190) comprises an indication that a time period associated with said meeting request is not moveable.

**12.** An electronic device (110), comprising,
a display module (120);
a communications interface for receiving, from a communications network, first data (190) representative of a meeting request;
a memory (140) for storing at least second data (S1) representative of an existing schedule; and
a processing unit (130) enabled for implementing the method of any one of claims 1 to 11.

**13.** The electronic device (110) of claim 12, further comprising an input device.

**14.** The electronic device (110) of claim 12, wherein said electronic device (110) comprises a handheld electronic device (110).

**15.** A computer readable medium embodying program code means that, when executed by a processor of a computing device, cause the computing device to perform the steps of the method of any one of claims 1 to 11.
